# EUROPEAN PATENT APPLICATION

(11) **EP 4 235 459 A1**
(43) Date of publication of application: **30.08.2023**
(21) Application number: 22176216.4
(22) Date of filing: 30.05.2022
(51) Int. Cl.: G06F 16/901, G06Q 10/00

(54) **CHURN PREVENTION USING GRAPHS**

(30) Priority: 28.02.2022 US 202217683112
(71) Applicant: Intuit Inc., Mountain View, CA 94043 (US)
(72) Inventor: RAMAKRISHNAN, Rohith, 560103 Karnataka (IN); JAIN, Rohit, 560103 Karnataka (IN)
(74) Representative: D Young & Co LLP

(57) **Abstract**

A method implements churn prevention using graphs. The method includes receiving clickstream data, which includes an event, of a user session with an application. The method further includes identifying the event as corresponding to a churn user account and mapping the event to a pair of nodes of a graph. The method further includes updating a churn user count of the pair of nodes in response to identifying the event as corresponding to the churn user account. The method further includes identifying an edge of the graph, corresponding to the pair of nodes. The method further includes updating a value of the edge using an active user count and the churn user count presenting an update responsive to the value.

## Description

### CROSS REFERENCE TO RELATED APPLICATION

This application is related to US Application titled "CHURN PREDICTION USING CLICKSTREAM DATA" [Attorney Docket number 37202/907001; 2212255US], dated February 28, 2022, having the same inventors, incorporated herein by reference.

### BACKGROUND

An application is software that executes and provides services to users. When a user believes that the application does not satisfy the user's needs, believes that the application is too complicated, or becomes frustrated with the application, the user stops using the application. The stopping use of the application is referred to as churn. Users may churn from an application by not returning to the application. A challenge is to predict which users that may, in the future, churn from an application and reduce the rate of churn.

### SUMMARY

Particular aspects are set out in the appended independent claims. Various optional embodiments are set out in the dependent claims.

In general, in one or more aspects, the disclosure relates to a method implementing churn prevention using graphs. The method includes receiving clickstream data, which includes an event, of a user session with an application. The method further includes identifying the event as corresponding to a churn user account and mapping the event to a pair of nodes of a graph. The method further includes updating a churn user count of the pair of nodes in response to identifying the event as corresponding to the churn user account. The method further includes identifying an edge of the graph, corresponding to the pair of nodes. The method further includes updating a value of the edge using an active user count and the churn user count and presenting an update responsive to the value.

In general, in one or more aspects, the disclosure relates to a system that includes a graph controller configured to receive clickstream data, a node controller configured to map an event to a pair of nodes, and an edge controller configured to update a value of an edge. The system further includes a modeling application executing on one or more servers. The clickstream data, including the event, of a user session is received. The event is identified as corresponding to a churn user account. The event is mapped to the pair of nodes of a graph. A churn user count of the pair of nodes is updated in response to identifying the event as corresponding to the churn user account. The edge corresponding to the pair of nodes is identified. The value of the edge is updated using an active user count and the churn user count. An update responsive to the value is presented.

A method implements churn prevention using graphs. The method includes receiving an event in response to interaction with a user device and identifying a node, of a graph, corresponding to the event. The method further includes identifying an edge, corresponding to the node and determining a value, of the edge, satisfies a threshold in response to receiving the event. The value is calculated using an active user count and a churn user count. An update responsive to determining the value satisfies the threshold is presented.

Other aspects of the present teachings will be apparent from the following description and the appended claims.

### BRIEF DESCRIPTION OF DRAWINGS

Figures 1A, Figure 1B, Figure 1C, and Figure 1D show diagrams of systems in accordance with disclosed embodiments.
Figure 2 shows a flowchart in accordance with disclosed embodiments.
Figure 3A, Figure 3B, Figure 3C, Figure 4A, Figure 4B, Figure 4C, and Figure 4D show examples in accordance with disclosed embodiments.
Figure 5A and Figure 5B show computing systems in accordance with disclosed embodiments.

### DETAILED DESCRIPTION

Specific embodiments and examples will now be described in detail with reference to the accompanying figures. Like elements in the various figures are denoted by like reference numerals for consistency.

In the following detailed description of embodiments and examples, numerous specific details are set forth in order to provide a more thorough understanding of the present techniques. However, it will be apparent to one of ordinary skill in the art that the present techniques may be practiced without these specific details. In other instances, well-known features have not been described in detail to avoid unnecessarily complicating the description.

Throughout the application, ordinal numbers (e.g., first, second, third, etc.) may be used as an adjective for an element (i.e., any noun in the application). The use of ordinal numbers is not to imply or create any particular ordering of the elements nor to limit any element to being only a single element unless expressly disclosed, such as by the use of the terms "before", "after", "single", and other such terminology. Rather, the use of ordinal numbers is to distinguish between the elements. By way of an example, a first element is distinct from a second element, and the first element may encompass more than one element and succeed (or precede) the second element in an ordering of elements.

In general, embodiments of the disclosure implement churn preventing using graphs. For example, a user accesses a system, e.g., a software application, to use the services offered through the application. The application may be a web application, locally executing application, or any other type of software application. A user may churn out of the system when the user stops accessing the system. For example, a user may use the system for a day, a week, a month, etc., but then stop accessing the system. The system tracks the length of time since a user last accessed the system and may use a threshold (e.g., 30 days) to identify the users that have churned out (i.e., have not accessed the system within the last 30 days).

The system tracks clickstream data (keyboard events, mouse movements, notifications, etc.) of users accessing the system. Based on the clickstream data, the system generates a graph. The graph includes nodes and edges with the nodes identifying events and the edges having values that identify the number of users that transition from one event to a subsequent event. The events include actions by the user (keyboard events, mouse events, etc.) and changes to the display presented to the user (e.g., notifications). For example, a user may click on a button of a page (an event), and, in response, a notification is displayed (a subsequent event).

Based on the values of the edges in the graph, the system may identify events that are associated with a high likelihood (e.g., above a predetermined threshold) that the user may churn out of the system. In response to identifying events with high likelihood of user churn, the system may take action to reduce the likelihood of a user churning out of the system. For example, a message may be sent to the user encouraging future use of the system to reduce churn. As another example, the user interface displayed to the user may be updated to encourage the user to trigger events that reduce the likelihood of churn.

The figures show diagrams of embodiments that are in accordance with the disclosure. The embodiments of the figures may be combined and may include or be included within the features and embodiments described in the other figures of the application. The features and elements of the figures are, individually and as a combination, improvements to the technology of churn prevention. The various elements, systems, components, and steps shown in the figures may be omitted, repeated, combined, and/or altered as shown from the figures. Accordingly, the scope of the present disclosure should not be considered limited to the specific arrangements shown in the figures.

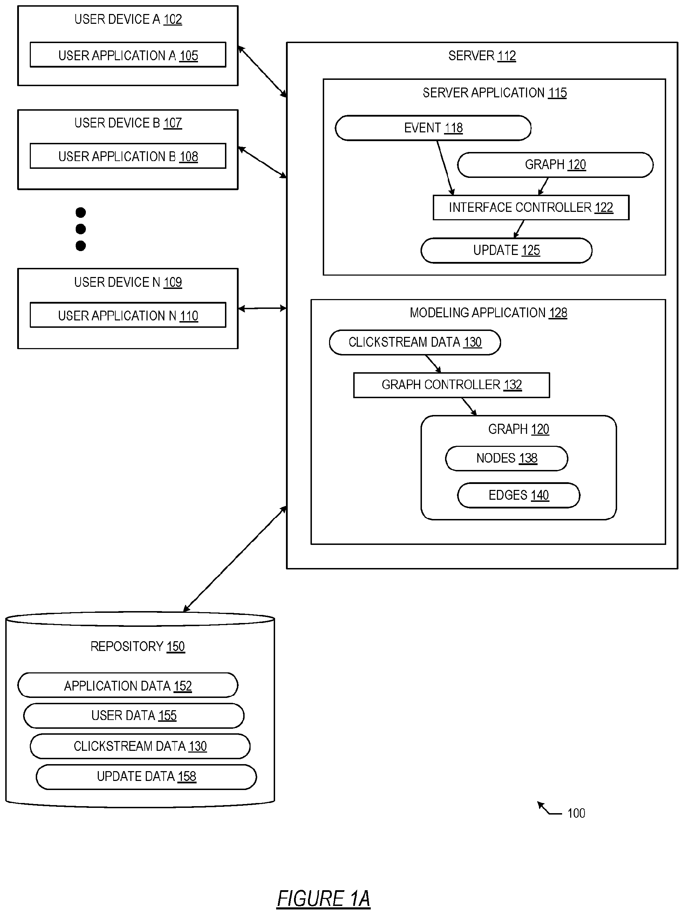

Turning to Figure 1A, the system (100) implements churn prevention using graphs generated from the clickstream data (130). Users operate the user devices A (102), B (107), and N (109) to access applications, such as websites, services, etc., that may be hosted by or connected to the server (112). Access by the users is recorded in the clickstream data (130) that is stored in the repository (150). The server (112) processes the clickstream data (130) (or a subset thereof) to generate the graph (120). The system (100) uses the graph (120) identify the update (125) that is used to reduce the likelihood of a user churning out of the system (100). The system (100) includes the user devices A (102), B (107), and N (109), the server (112), and the repository (150).

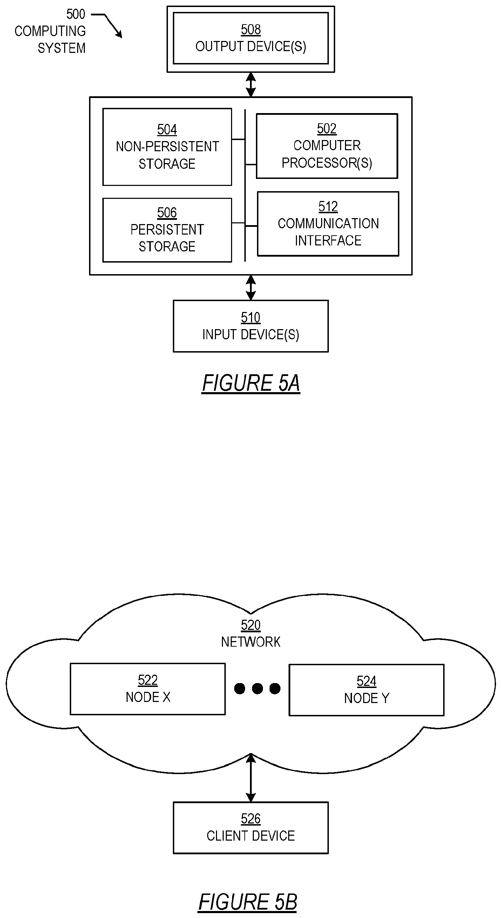

The server (112) is a computing system (further described in Figure 5A). The server (112) may include multiple physical and virtual computing systems that form part of a cloud computing environment. In one embodiment, execution of the programs and applications of the server (112) is distributed to multiple physical and virtual computing systems in the cloud computing environment. The server (112) includes the server application (115) and the modeling application (128).

The server application (115) is a collection of programs that may execute on multiple servers of a cloud environment, including the server (112). The server application (115) identifies the update (125) using the event (118) and the graph (120). The server application (115) may host websites accessed by users of the user devices A (102) through N (109). The websites hosted by the server application (115) may serve structured documents (hypertext markup language (HTML) pages, extensible markup language (XML) pages, JavaScript object notation (JSON) files and messages, etc.). The server application (115) includes the interface controller (122), which processes the event (118) using the graph (120).

The event (118) may identify actions taken by the user (keyboard events, mouse events, etc.) in an application. In some embodiments, the event also includes a change to the display presented to the user. For example, a user may click on a button of a page of a website that triggers a notification to be displayed to the user. Clicking the button of the page may be one event and displaying the notification may be another event. In one embodiment, the event (118) is a most recent event from the clickstream data (130) for a particular user.

The graph (120) is generated with the modeling application (128), described further below. The graph (120) includes nodes and edges in which a node from the graph (120) corresponds to the event (118). The graph (120) is a directed graph in which the edges identify a direction from one node to a subsequent node in the graph (120).

The interface controller (122) is a collection of programs that may operate on the server (112). The interface controller (122) identifies the update (125) using the event (118) and the graph (120). In one embodiment, the interface controller (122) identifies a node of the graph (120), which corresponds to the event (118), and the outgoing edges that correspond to the node for the event (118). The values of the outgoing edges are used to identify the update (125) from the update data (158). For example, when the value of an outgoing edge satisfies a threshold (e.g., is greater than), then the user that generated the event (118) may be likely to churn out of the system (100) and the update (125) may include a preventative action to reduce the likelihood that the user will churn out of the system (100). For example, the update (125) may identify adjustments to a user interface to reduce the likelihood of the user churning out.

The update (125) defines an action taken by the system (100) to reduce the likelihood of a user trying out of the system. For example, the update (125) may specify adjustments to user interface, identify a message to be sent to the user, etc. The update (125) may be a string of text (e.g., JSON (JavaScript object notation) text) that uses keys and values to specify updates to the user interface, defines the type and content of messages to be transmitted to the user, etc.

The modeling application (128) is a collection of programs that may operate on the server (112). The modeling application (128) generates the graph (120) from the clickstream data (130) using a graph controller (132).

The clickstream data (130) is data that is tracked by the system (100). The clickstream data (130) includes the events (keyboard events, mouse events, notification events, etc.) generated by the interactions of the users with the system (100). The clickstream data (130) includes historical data from both users that are still accessing the system and from users that have churned out of the system (e.g., have not access the system within a predefined number of days).

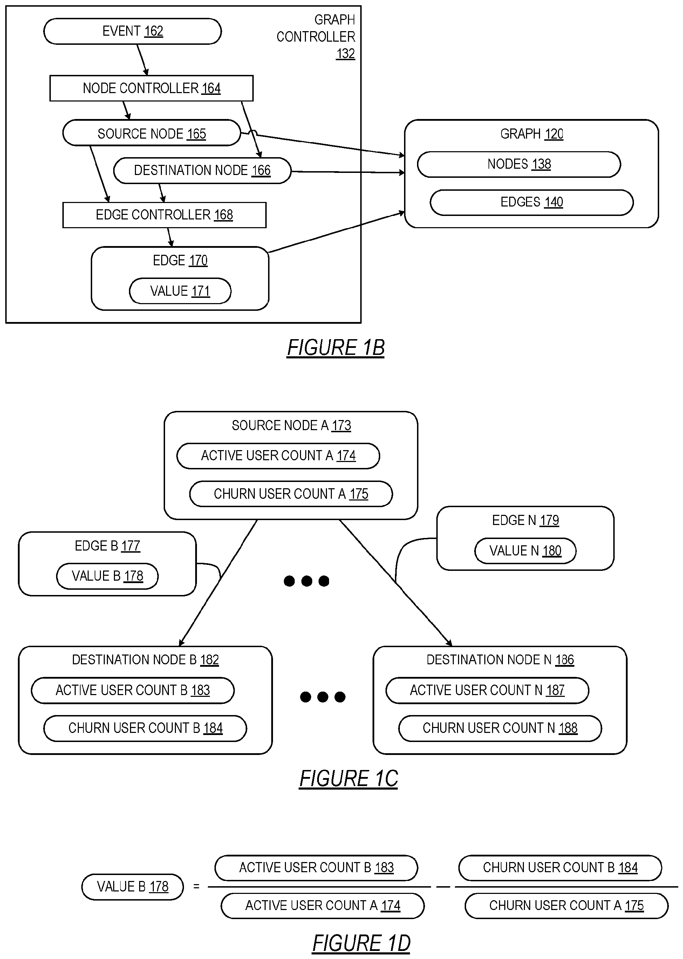

The graph controller (132) generates the graph (120) from the clickstream data (130). The graph controller (132) is a collection of programs that may operate on the server (112). For the events in the clickstream data (130), the graph controller (132) identifies the nodes (138) and the edges (140), which is described further below with Figure 1B.

The graph (120) is generated from the clickstream data (130) and includes the nodes (138) and the edges (140). The node (138) represents events triggered by the interaction of users with the system (100). The edges (140) identify pairs of the nodes (138) that represent temporarily adjacent events. A pair of nodes are completely adjacent when, during a session with a user, a first event (corresponding to a first node of a pair of nodes) is triggered and subsequently followed by the triggering of a second event (corresponding to a second node of a pair of nodes).

The user devices A (102) and B (107) through N (109) are computing systems (further described in Figure 5A). For example, the user devices A (102) and B (107) through N (109) may be desktop computers, mobile devices, laptop computers, tablet computers, server computers, etc. The user devices A (102) and B (107) through N (109) include hardware components and software components that operate as part of the system (100). The user devices A (102) and B (107) through N (109) communicate with the server (112) to access and manipulate information, including the application data (152). The user devices A (102) and B (107) through N (109) may communicate with the server (112) using standard protocols and file types, which may include hypertext transfer protocol (HTTP), HTTP secure (HTTPS), transmission control protocol (TCP), internet protocol (IP), hypertext markup language (HTML), extensible markup language (XML), etc. The user devices A (102) and B (107) through N (109) respectively include the user applications A (105) and B (108) through N (110).

The user applications A (105) and B (108) through N (110) may each include multiple programs respectively running on the user devices A (102) and B (107) through N (109). The user applications A (105) and B (108) through N (110) may be native applications, web applications, embedded applications, etc. In one embodiment, the user applications A (105) and B (108) through N (110) include web browser programs that display web pages from the server (112). In one embodiment, the user applications A (105) and B (108) through N (110) provide graphical user interfaces that display financial management software and services hosted by the system (100).

As an example, the user application A (105) be used by a user to view account information hosted by the system (100). Some of the account information may be incorrect and the system may prompt the user to correct the account information.

As another example, the user device and (109) may be used by a developer to maintain the software application posted by the server (112). Developers may view the edges (140) of the graph (120) and make updates to the application data (152) modify the application served to the users of the system (100).

The repository (150) is a computing system that may include multiple computing devices in accordance with the computing system (500) and the nodes (522) and (524) described below in Figures 5A and 5B. The repository (150) may be hosted by a cloud services provider that also hosts the server (112). The cloud services provider may provide hosting, virtualization, and data storage services as well as other cloud services and to operate and control the data, programs, and applications that store and retrieve data from the repository (150). The data in the repository (150) includes the application data (152), the user data (155), the clickstream data (130), and the update data (158).

The application data (152) includes information that is accessed by users of the system (100) as well as the source code files of an application (e.g., HTML files). In one embodiment, the application data (152) includes financial information related to financial accounts of the users of the system (100) that is stored in a database.

The user data (155) includes information that describes the users of the system (100). The user data (155) may include user profile information, which may include values for the username of a user and settings for an application accessed by the user through the system (100).

The clickstream data (130) includes the events generated by the users of the system (100) when accessing the system (100). The events of the clickstream data (130) include keyboard events, mouse events, notification events, etc. Notification events include displaying success or failure codes encountered by users while using the system (100). The events of the clickstream data (130) included several pieces of information. For example, the data of an event may include an application identifier, a resource identifier, an action identifier, etc. The application identifier is a value that identifies the application being used, by the user, to access the system (100). The resource identifier identifies the resource being accessed by the user and may be a URL (uniform resource locator). The action identifier is a value that identifies an action being performed. The actions include user triggered actions (keyboard events, mouse events, etc.) and system triggered actions (e.g., notifications), which may be displayed to the user.

The update data (158) is data from which the update (125) is generated. The update data specifies the possible updates that may be performed by the system to reduce the likelihood of these return. In one embodiment, the update data (158) may include key value pair text strings (e.g., JSON text) that identify actions to be taken. For example, a key value pair text string may identify elements of a user interface to modify in order to reduce user churn. Modification of the user interface to reduce user churn may reposition buttons, make certain buttons larger or smaller, etc. As another example, a key value pair text string may identify a type of message and the content of a message to send to a user to encourage the user to access the system. Types of messages may include email, SMS (short message service), social media, etc. The content may include text, e.g., "Thanks for using our system, you're eligible for a discount the next time you access your account!".

Turning to Figure 1B, the graph controller (132) processes the event (162) to update the graph (120). The graph controller (132) includes the node controller (164) and the edge controller (168).

The event (162) is one of a temporal sequence of events from the clickstream data (130) (of Figure 1A) for a user that accessed the system (100) (of Figure 1A). The event (162) is input to the node controller (164).

The node controller (164) is a program that may run as part of the graph controller (132). The node controller (164) identifies nodes from events. For example, the node controller (164) receives the event (162) and identifies the source node (165) and the destination node (166). If the source node (165) and the destination node (166) are not present in the nodes (138) of the graph (120), then the node controller (164) adds the source node (165) and the destination node (166) to the nodes (138) of the graph (120).

The source node (165) represents an event that occurred temporarily before the event represented by the destination node (166). The source node (165) may represent the action of a user clicking on a button and the destination node (166) may represent the action of displaying a notification after the user clicks the button. For example, clicking the button may request verification of an account. In response to the button being clicked, the system (100) verifies the account and generates a notification that identifies the success or failure of the verification of the account. The notification is displayed on a user device (e.g., the user device A (102)).

The edge controller (168) is a program that may run as part of the graph controller (132). The edge controller (168) identifies the edge (170) from the source node (165) and the destination node (166). The edge controller (168) calculates the values (e.g., the value (171)) of the edges (140) of the graph (120), which is discussed further below.

The edge (170) is an edge between the source node (165) and the destination node (166). The edge (170) is a directed edge that starts from the source node (165) and ends at the destination node (166). If the edge (170) is not present in the edges (140), then the edge controller (168) adds the edge (170) to the edges (140) of the graph (120).

Turning to Figure 1C, the source node (173) and the destination nodes B (182) through N (186) are part of the nodes (138) (of Figure 1A) of the graph (120) (of Figure 1A). The edges B (177) through N (179) are part of the edges (140) of the graph (120). The edge B (177) connects between the source node A (173) and the destination node B (182). The edge N (179) connects between the source node A (173) and the destination node N (186).

The nodes A (173), B (182), and N (186) represent events generated by user interactions with the system (100) (of Figure 1A). The nodes A (173), B (182), and N (186) respectively include the active user counts A (174), B (183), and N (187) and respectively include the churn user counts A (175), B (184), and N (188).

An active user count of a node (e.g., the active user count A (174) of the source node A (173)) identifies the number of active users of the system (100) (of Figure 1A) that reached the node by triggering the event corresponding to the node. An active user is a user that not churned out the system (e.g., has accessed the system within a threshold period (e.g., 45 days) of time).

A churn user count of a node (e.g., the churn user count A (174) of the source node A (173)) identifies the number of users that have churned out of the system (100) (of Figure 1A) that reached the node by triggering the event corresponding to the node. Users that have churned out of the system may be referred to as inactive users. In one embodiment, the churn user count of a node represents the number of users who reached the particular destination node from a specific source node, instead of the total number of users that reached the particular destination node from any source node.

The edges B (177) through N (179) respectively include the values B (178) through N (180). A value of an edge is calculated using the active user counts and churn user counts of the source and destination nodes that correspond to the edge. For example, the value B (178) of the edge B (177) is calculated using the active user count A (174) and the churn user count A (175) of the source node A (173) and using the active user count B (183) and the churn user count B (184) of the destination node A (182).

Turning to Figure 1D, one embodiment of an algorithm to calculate values (e.g., the value B (178)) of edges (e.g., the edge B (177) of Figure 1C) is illustrated. The value B (178) is calculated using the active user count A (174), the churn user count A (175), the active user count B (183), and the churn user count B (184). The quotient of the churn user count B (184) divided by the churn user count A (175) is subtracted from the quotient of the active user count B (183) divided by the active user count A (174).

Although shown using distributed computing architectures and systems, other architectures and systems may be used. In one embodiment, the server application (115) (of Figure 1A) may be part of a monolithic application that implements churn prediction using clickstream data. In one embodiment, the user applications A (105) and B (108) through N (110) (of Figure 1A) may be part of a monolithic applications that implement churn prediction using clickstream data without the server application (115).

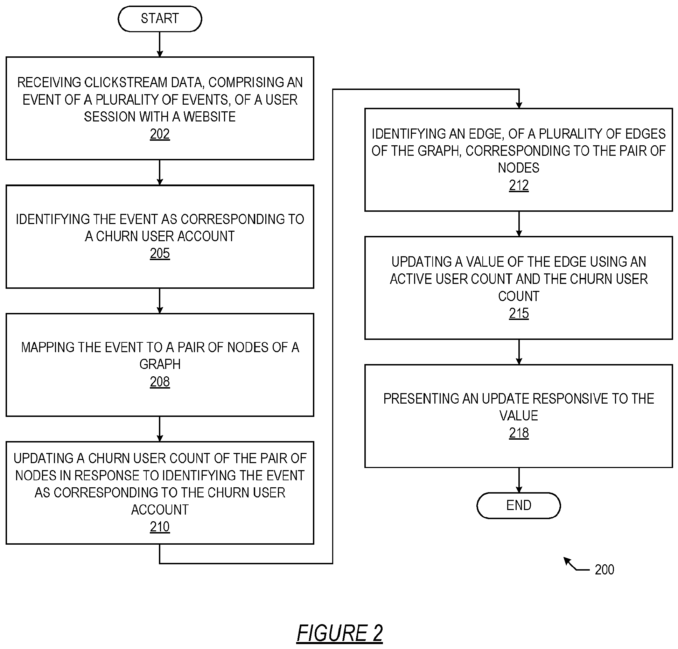

Turning to Figure 2, the process (200) generates graphs for churn prevention. The process (200) may be performed by a server.

At Step 202, clickstream data of a user session with an application is received. A user session starts when the user accesses and connects to the application and ends when the user disconnects from the application. The clickstream data includes and event of a temporal sequence of events. The temporal sequence of events are the events triggered by interaction between the user and the system. The clickstream data may be historical data that includes events from past user sessions.

At Step 205, the event is identified as corresponding to a churn user account. In one embodiment, the event is identified as corresponding to a churn user account by determining if the user that triggered the event satisfies a churn threshold. The churn threshold identifies a length of time (e.g., 1 week, 30 days, 1 month, etc.). In one embodiment, if the user that triggered the event being processed has not accessed the system within the churn threshold (e.g., within the last 30 days), then the event is identified as corresponding to a churn user account. A churn user account is a user account has not been accessed by the user for a threshold length of time, i.e., the churn threshold.

At Step 208, the event is mapped to a pair of nodes of a graph. The pair of nodes includes a source node and a destination node. The destination node corresponds to the event, and the source node corresponds to a previous event from the user session. For example, a pair of nodes may include a source node that represents the user clicking a button on a user interface and include a destination node that represents displaying a notification to the user response to be button being clicked. In one embodiment, the events may be formed as key value pair text strings (e.g., JSON text) that identify the user, the application used by the user (e.g., a web browser), the application accessed by the user, etc.

The graph may be updated periodically, e.g., once a day, week, month, etc. Updating the graph may include updating the nodes and edges of the graph along with the counts and values for the nodes and edges of the graph to include events from clickstream data generated after the previous graph was created.

At Step 210, a churn user count of the pair of nodes is updated. The update may be in response to identifying the event as corresponding to the churn user account. In one embodiment, the churn user count of the destination node of the pair of nodes is updated by incrementing the churn user count. In one embodiment, the system tracks which users have triggered which events and updates the churn user count when the event being processed is triggered by a user that has not previously triggered the event. The churn user account counts the number of different users that have triggered a particular event corresponding to a particular node.

When the event does not correspond to a churn user account, the event may correspond to an active user account of a user that has accessed the system within the churn threshold. In response, the system may update an active user count of the destination node. The active user count identifies the number of different active users that have reached the destination node by triggering the corresponding event.

At Step 212, an edge corresponding to the pair of nodes is identified. The edge is an outgoing edge of a source node of the pair of nodes and is an incoming edge of a destination node of the pair of nodes.

At Step 215, a value of the edge is updated using an active user count and the churn user count. In one embodiment, the value is calculated using a formula. The formula includes dividing the active user count of a destination node, of the pair of nodes, by an active user count of a source node, of the pair of nodes, to generate an active percentage. The formula further includes dividing the churn user count of the destination node, of the pair of nodes, by a churn user count of the source node, of the pair of nodes, to generate a churn percentage. The formula further includes calculating a difference between the churn percentage and the active percentage to form the value.

At Step 218, an update is presented responsive to the value. Presenting the update may include transmitting a message to a user and adjusting the user interface. The update may be presented when the value of the edge satisfies a threshold for the value.

In one embodiment, the update is presented by transmitting the update to a user device in response to determining the value satisfies a threshold. The update may be to an end user of the system to induce the user to take actions that reduce user churn. In one embodiment, the update may include commands to adjust a user interface (moving buttons, changing the size of user interface elements, etc.). The commands may be structured in a key value pair text string (e.g., JSON text string). In one embodiment, the update may be in the form of a message (email, text message, social media message, etc.) that is transmitted to the user.

In one embodiment, the update is presented by transmitting a table comprising the value to a user device. The update may be to a user that is a developer that uses the updated (the table) to update the application to induce end users of the system to take actions that reduce user churn. For example, the update may contain a table with rows corresponding to edges from the graph and with a column that identifies the values calculated for the edges of the graph. The table may be filtered and sorted to show edges with values above the value threshold amount. The rows of the table show edges that identify sequences of user actions that, when performed by a user, lead to a high user churn. The developer may adjust the application to reduce the likelihood of a user performing the sequence of actions identified in the rows of the table.

In one embodiment, the graph may be used by a process to analyze events as the events are generated by the system. The process includes receiving the event in response to interaction, by the system with a user device. The process further includes identifying a node, of the graph, corresponding to the event. The process further includes identifying an edge corresponding to the node. The process further includes determining that the value, of the edge, satisfies a threshold in response to receiving the event. When the value satisfies the threshold, assistant may generate and present an update to the user.

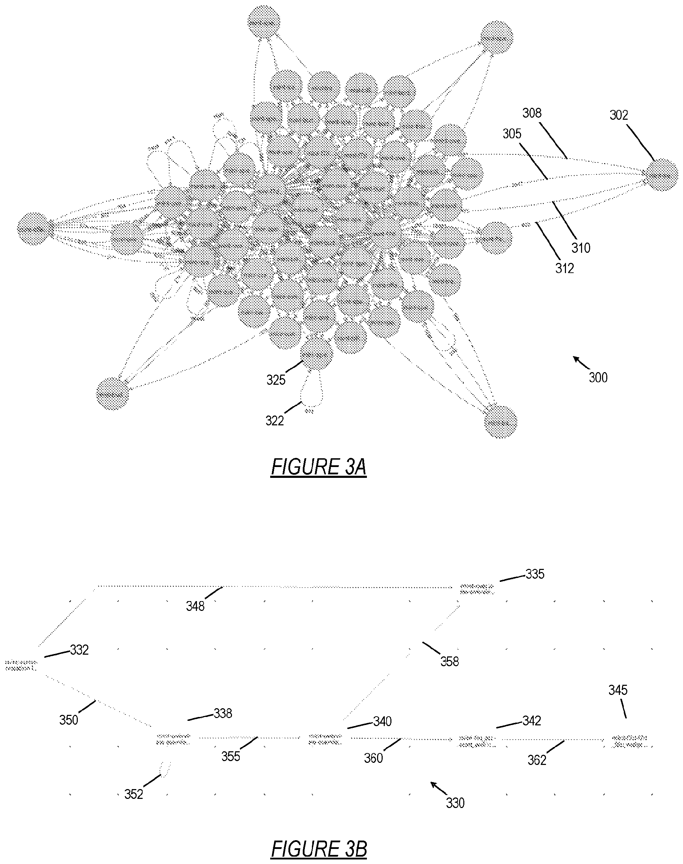

Turning to Figure 3A, the graph (300) is generated from clickstream data and includes multiple nodes and edges. The graph (300) may be displayed on a user device to a developer. The node (302) includes the incoming edges (305) and (308) related to an active user account for an active user. The node (302) also includes the incoming edges (310) and (312) related to a churn user account for an inactive user. Each of the nodes of the graph (300) may be source nodes or destination nodes. Each of the nodes of the graph (300) represent an event triggered by users accessing the system. Edges for inactive (churned out) users may be shown in one color (e.g., red) and edges for active users show in a different color (e.g., green). An edge (e.g., the edge (322)) may have the same node (e.g., the node (325)) for both the source and destination nodes of the edge.

Turning to Figure 3B, the graph (330) is a subset of the graph (300) (of Figure 3A) and may be displayed on a user interface. The graph (330) includes the nodes (332) through (345) and the edges (348) through (362). The nodes (332) through (345) correspond to events triggered by users of the system.

The pair of nodes (332) and (335) are connected by the edge (348) with the node (332) as the source node and the node (335) as destination node. The edge (348) is identified with inactive users (e.g., by being colored red). The edge (348) indicates that users who trigger the event for the node (335) after triggering the event for the node (332) may churn out of and not access the system. The edge (350) is identified with active users (e.g., by being colored green). The edge (350) indicates that users who triggered the event for the node (332) after triggering the event for the node (332) continue to access the system. When the nodes (335) and (352) each correspond to buttons displayed on a user interface, the user interface may be adjusted to enlarge the button for the node (338) with respect to the button for the node (335). Enlarging the button for the node (338) encourages users to trigger the event associated with the node (338) instead of triggering the event associated with the node (335) to reduce user churn.

The color of the edges (not shown) may be determined by the values for the edges. For example, edges with negative values (corresponding to inactive users) may be colored red and edges with positive values (corresponding to active users) may be colored green.

The edge (352), associated with active users, connects the node (338) with itself. The edge (355), associated with inactive users, connects the node (338) to the node (340).

The edge (358), associated with active users, connects from the node (340) to the node (335). The edge (360), associated with inactive users, connects from the node (340) to the node (342). The edge (362), associated with inactive users, connects from the node (342) to the node (345).

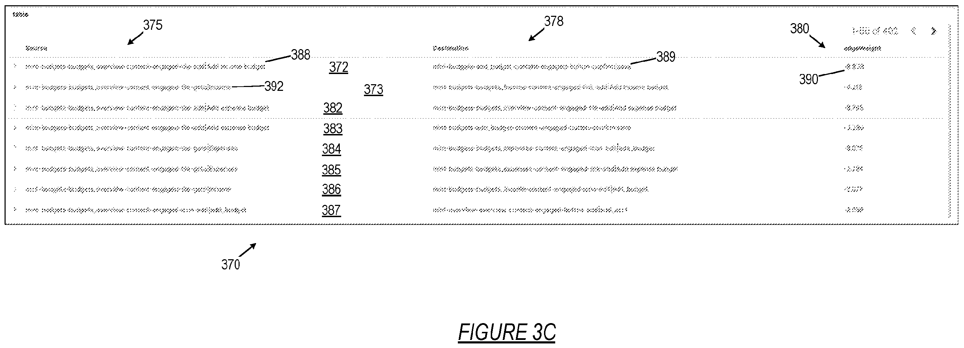

Turning to Figure 3C, the table (370) may be displayed on a user interface. The rows (including the rows (372), (373), (383), (384), (385), (386), and (387)) of the table (370) correspond to edges of a graph (e.g., the graph (300) of Figure 3A)) that are generated from clickstream data.

The table (370) includes the columns (375), (378), and (380). Data in the column (375) identifies the source node of an edge and data in the column (378) identifies the destination node of the edge. Data in the column (380) identify the values calculated for the edges of the graph. For example, the edge corresponding to the row (372) has a value (in column (380)) of "-9.933" and is the lowest or most negative value in the table (370). A developer may update the application to discourage users from triggering the event (identified in the column (375)) corresponding to the destination node associated with the row (372) after having triggered the event (identified in the column (378)) corresponding to the source node associated with the row (372).

Additionally, a developer may set a threshold for the value of an edge (also referred to as a value threshold) that triggers the system to automatically update the user interface presented to a user. For example, a developer may set the value threshold to "-5". With the value threshold set to "-5", the system would automatically update the user interface (e.g., adjust button sizes and locations) in response to identifying subsequent events corresponding to edges with values that satisfied the value threshold.

For example, a user may trigger the event identified by the source node (388) of the edge of the row (372). When the event of the source node (388) is triggered, the system may check the table (370) for the value (390) ("-9.933") of the edge corresponding to the row (372). The system may identify that the value (390) satisfies the value threshold (e.g., is less than "-5") and adjust the user interface to reduce user churn. The system may also adjust the user interface when the source node (392) of the row (373) is triggered.

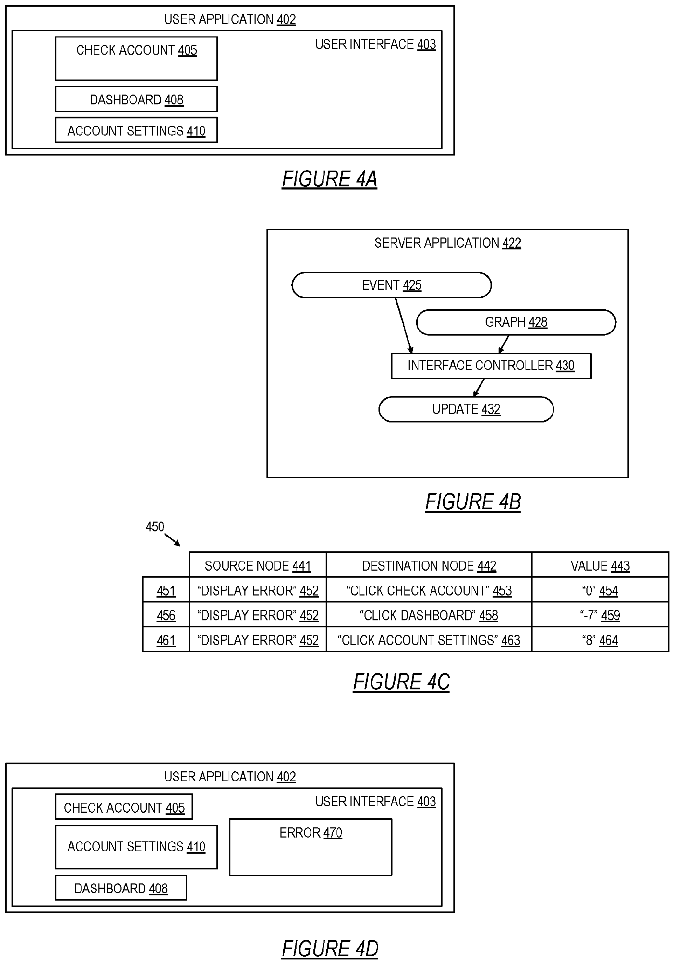

Turning to Figure 4A, the user application (402) displays the user interface (403). The user interface (403) includes the check account button (405), the dashboard button (408) and the account settings button (410). The check account button (405) is larger than, and displayed above, the dashboard button (408) and the account settings button (410).

Selecting one of the buttons (405), (408), and (410) is a user interaction that triggers an event that is saved in the clickstream data recorded by the system. The events generated by selecting the buttons (405), (408), and (410) correspond to nodes in the graph (428) Figure 4B. For example, a notification displayed in response to selecting the check account button (405) may trigger the event (425) of Figure 4B. In addition to triggering events, selecting the buttons (405), (408), and (410) initiate additional processes.

Selecting the check account button (405) transmits a message to the server application (422) (of Figure 4B) to request the status of an account of a user. A user may select the check account button (405) to request the system to verify that an account is properly set up with the system. The system may respond to the request with a notification that identifies the status of the account. The notification of the status of the account may correspond to the event (425) of Figure 4B.

Selecting the dashboard button (408) transitions the user interface to a different view that displays a dashboard. The dashboard may display information about the account of the user.

Selecting the account settings button (410) transitions the user interface to a settings view. In the settings view, the user may interact with user interface elements to update settings for the account of the user maintained by the system.

Turning to Figure 4B, the server application (422) generates the update (432) based on the event (425) and graph (428) using the interface controller (430) after the user selects the check account button (405) (of Figure 4A) in the user interface (403) (of Figure 4A). For example, the interface controller (430) identifies an edge of the graph (428) that corresponds to the event (425).

The event (425) corresponds to a source node of an edge of the graph (428). The interface controller (430) may identify the list (450) (of Figure 4C) of edges, in which each edge includes the source node that corresponds to the event (425). The interface controller (430) may then determine if the edges, of the list of edges (450) (of Figure 4C), include values that satisfy the value threshold. If values of an edge of the list of edges satisfy the value threshold, the interface controller (430) generates the update (432) with user interface adjustments, an example of which is described with Figure 4C.

Additionally, in response to selection of the check account button (405) (of Figure 4A), the server application (422) text the account of the user. As an example, the server application (422) may identify an error with the account. The update (432) may include a notification of the error with the account.

In one embodiment, the update (432) includes a text string formatted as key value pairs to identify the error and the adjustments to the user interface. In one embodiment, the update (432) may include the following key value pair text.

```
        {
        "update": [
        "check account button size": "regular",
        "dashboard button size": "regular",
        "account settings button size": "large",
  
        "check account button location": "1",
        "dashboard button location": "3",
        "account settings button location": "2",
        "notification": "ERROR"
        ]
 }
```

The values for the "... button size" keys in the key value pair text identify the size of the button to be displayed. The values of the "... button location" keys identify the locations to display the buttons. The value for the "notification" key identifies the text to display for the notification in response to checking the account.

Turning to Figure 4C, the list (450) is generated by the interface controller from the graph (428) using the event (425) (of Figure 4B). The rows (451), (456), and (461) of the list (450) correspond to edges of the graph (428) (of Figure 4B). The columns (441), (442), and (443) respectively identify the source node, the destination node, and value for the edges corresponding to the rows (451), (456), and (461). Each of the edges of the rows (451), (456), and (461) identify the same source node "DISPLAY ERROR" (452). The destination nodes (453), (458), and (463) of the edges of the rows (451), (456), and (461) correspond to events triggered by selection of the buttons (405), (408), and (410) of the user interface (403) (Figure 4A).

Positive numbers for values (e.g., the value "8" (464) of the row (461)) in the value column (443) correspond to edges with destination nodes for events triggered by more active users than inactive users. For example, the edge for the row (461) includes the source node (452) and the destination node (463). The source node (452) corresponds to displaying the error notification (470) (of Figure 4D). The destination node (458) corresponds to a user clicking on the account settings button (410) (of Figure 4D) after the error notification (470) (of Figure 4D) is displayed. Active users may resolve the error by fixing the account by clicking on the account settings button (410) (of Figure 4D).

Negative numbers for values (e.g., the value "-7" (459) of the row (456)) in the value column (443) correspond to edges with destination nodes for events triggered by more inactive users than active users. For example, the edge for the row (456) includes the source node (452) and the destination node (458). The source node (452) corresponds to displaying the error notification (470) (of Figure 4D). The destination node (458) corresponds to a user clicking on the dashboard button (408) (of Figure 4D) after the error notification (470) (of Figure 4D) is displayed. Inactive users may ignore the error instead of fixing the account by clicking on the dashboard button (408) (of Figure 4D).

Turning to Figure 4D, the user interface (403) of the user application (402) is updated after receiving the update (432) (of Figure 4B). The user interface adjustments from the update (432) (of Figure 4B) update the user interface (403) to adjust the size and locations of the buttons (405), (408), and (410) and to display the error notification (470) ("ERROR").

The error notification (470) includes the value "ERROR" and provides an indication to the user that the account that was checked, in response to selection of the check account button (405), is not set up correctly. In this situation, the user interface (403) is adjusted to enhance the account settings button (410).

The account settings button (410) is enhanced by increasing the size of the account settings button (410) relative to the buttons (405) and (408) and by moving the account settings button (410) above the dashboard button (408). Enhancing the account settings button (410) increases the likelihood that the user will select the account settings button (410) as opposed to the dashboard button (408). Selecting the account settings button (410) after displaying the error notification (470) may correspond with users having a higher likelihood of continuing to access the system in the future and reduce user churn.

The dashboard button (408) is demoted by moving it below the account settings button (410). Demoting the dashboard button (408) decreases the likelihood that a user will select the dashboard button (408). Selecting the dashboard button (408) after displaying the error notification (470) may correspond with users that churn out and have a lower likelihood of continuing to access the system in the future.

Embodiments may be implemented on a computing system. Any combination of a mobile, a desktop, a server, a router, a switch, an embedded device, or other types of hardware may be used. For example, as shown in Figure 5A, the computing system (500) may include one or more computer processor(s) (502), non-persistent storage (504) (e.g., volatile memory, such as a random access memory (RAM), cache memory), persistent storage (506) (e.g., a hard disk, an optical drive such as a compact disk (CD) drive or a digital versatile disk (DVD) drive, a flash memory, etc.), a communication interface (512) (e.g., Bluetooth interface, infrared interface, network interface, optical interface, etc.), and numerous other elements and functionalities.

The computer processor(s) (502) may be an integrated circuit for processing instructions. For example, the computer processor(s) (502) may be one or more cores or microcores of a processor. The computing system (500) may also include one or more input device(s) (510), such as a touchscreen, a keyboard, a mouse, a microphone, a touchpad, an electronic pen, or any other type of input device.

The communication interface (512) may include an integrated circuit for connecting the computing system (500) to a network (not shown) (e.g., a local area network (LAN), a wide area network (WAN) such as the Internet, a mobile network, or any other type of network) and/or to another device, such as another computing device.

Further, the computing system (500) may include one or more output device(s) (508), such as a screen (e.g., a liquid crystal display (LCD), a plasma display, a touchscreen, a cathode ray tube (CRT) monitor, a projector, or other display device), a printer, an external storage, or any other output device. One or more of the output device(s) (508) may be the same or different from the input device(s) (510). The input and output device(s) (510 and (508)) may be locally or remotely connected to the computer processor(s) (502), non-persistent storage (504), and persistent storage (506). Many different types of computing systems exist, and the aforementioned input and output device(s) (510 and (508)) may take other forms.

Software instructions in the form of computer readable program code to perform embodiments may be provided by way of a computer-readable medium. A computer readable medium may comprise a communication medium and/or a storage medium. A storage medium may store such instructions, in whole or in part, temporarily or permanently, on a non-transitory computer readable medium such as a CD, a DVD, a storage device, a diskette, a tape, flash memory, physical memory, or any other computer readable storage medium. A communication medium may convey such instructions, in whole or in part, using a carrier wave, transmission signal, or the like. A communication medium may occur between component of a single computer system and/or between plural separate computer systems. Specifically, the software instructions may correspond to computer readable program code that, when executed by a processor(s), is configured to perform one or more embodiments.

The computing system (500) in Figure 5A may be connected to or be a part of a network. For example, as shown in Figure 5B, the network (520) may include multiple nodes (e.g., node X (522), node Y (524)). Each node may correspond to a computing system, such as the computing system (500) shown in Figure 5A, or a group of nodes combined may correspond to the computing system (500) shown in Figure 5A. By way of an example, embodiments may be implemented on a node of a distributed system that is connected to other nodes. By way of another example, embodiments may be implemented on a distributed computing system having multiple nodes, where one or more portions of the present techniques may be located on a different node within the distributed computing system. Further, one or more elements of the aforementioned computing system (500) may be located at a remote location and connected to the other elements over a network.

Although not shown in Figure 5B, the node may correspond to a blade in a server chassis that is connected to other nodes via a backplane. By way of another example, the node may correspond to a server in a data center. By way of another example, the node may correspond to a computer processor or micro-core of a computer processor with shared memory and/or resources.

The nodes (e.g., node X (522), node Y (524)) in the network (520) may be configured to provide services for a client device (526). For example, the nodes may be part of a cloud computing system. The nodes may include functionality to receive requests from the client device (526) and transmit responses to the client device (526). The client device (526) may be a computing system, such as the computing system (500) shown in Figure 5A. Further, the client device (526) may include and/or perform all or a portion of one or more embodiments.

The computing system (500) or group of computing systems described in Figures 5A and 5B may include functionality to perform a variety of operations disclosed herein. For example, the computing system(s) may perform communication between processes on the same or different system. A variety of mechanisms, employing some form of active or passive communication, may facilitate the exchange of data between processes on the same device. Examples representative of these inter-process communications include, but are not limited to, the implementation of a file, a signal, a socket, a message queue, a pipeline, a semaphore, shared memory, message passing, and a memory-mapped file. Further details pertaining to a couple of these non-limiting examples are provided below.

Based on the client-server networking model, sockets may serve as interfaces or communication channel end-points enabling bidirectional data transfer between processes on the same device. Foremost, following the client-server networking model, a server process (e.g., a process that provides data) may create a first socket object. Next, the server process binds the first socket object, thereby associating the first socket object with a unique name and/or address. After creating and binding the first socket object, the server process then waits and listens for incoming connection requests from one or more client processes (e.g., processes that seek data). At this point, when a client process wishes to obtain data from a server process, the client process starts by creating a second socket object. The client process then proceeds to generate a connection request that includes at least the second socket object and the unique name and/or address associated with the first socket object. The client process then transmits the connection request to the server process. Depending on availability, the server process may accept the connection request, establishing a communication channel with the client process, or the server process, busy in handling other operations, may queue the connection request in a buffer until server process is ready. An established connection informs the client process that communications may commence. In response, the client process may generate a data request specifying the data that the client process wishes to obtain. The data request is subsequently transmitted to the server process. Upon receiving the data request, the server process analyzes the request and gathers the requested data. Finally, the server process then generates a reply including at least the requested data and transmits the reply to the client process. The data may be transferred, more commonly, as datagrams or a stream of characters (e.g., bytes).

Shared memory refers to the allocation of virtual memory space in order to substantiate a mechanism for which data may be communicated and/or accessed by multiple processes. In implementing shared memory, an initializing process first creates a shareable segment in persistent or non-persistent storage. Post creation, the initializing process then mounts the shareable segment, subsequently mapping the shareable segment into the address space associated with the initializing process. Following the mounting, the initializing process proceeds to identify and grant access permission to one or more authorized processes that may also write and read data to and from the shareable segment. Changes made to the data in the shareable segment by one process may immediately affect other processes, which are also linked to the shareable segment. Further, when one of the authorized processes accesses the shareable segment, the shareable segment maps to the address space of that authorized process. Often, only one authorized process may mount the shareable segment, other than the initializing process, at any given time.

Other techniques may be used to share data, such as the various data sharing techniques described in the present application, between processes without departing from the scope. The processes may be part of the same or different application and may execute on the same or different computing system.

Rather than or in addition to sharing data between processes, the computing system performing one or more embodiments may include functionality to receive data from a user. For example, in one or more embodiments, a user may submit data via a graphical user interface (GUI) on the user device. Data may be submitted via the graphical user interface by a user selecting one or more graphical user interface widgets or inserting text and other data into graphical user interface widgets using a touchpad, a keyboard, a mouse, or any other input device. In response to selecting a particular item, information regarding the particular item may be obtained from persistent or non-persistent storage by the computer processor. Upon selection of the item by the user, the contents of the obtained data regarding the particular item may be displayed on the user device in response to the user's selection.

By way of another example, a request to obtain data regarding the particular item may be sent to a server operatively connected to the user device through a network. For example, the user may select a uniform resource locator (URL) link within a web client of the user device, thereby initiating a Hypertext Transfer Protocol (HTTP) or other protocol request being sent to the network host associated with the URL. In response to the request, the server may extract the data regarding the particular selected item and send the data to the device that initiated the request. Once the user device has received the data regarding the particular item, the contents of the received data regarding the particular item may be displayed on the user device in response to the user's selection. Further to the above example, the data received from the server after selecting the URL link may provide a web page in Hyper Text Markup Language (HTML) that may be rendered by the web client and displayed on the user device.

Once data is obtained, such as by using techniques described above or from storage, the computing system, in performing one or more embodiments, may extract one or more data items from the obtained data. For example, the extraction may be performed as follows by the computing system (500) in Figure 5A. First, the organizing pattern (e.g., grammar, schema, layout) of the data is determined, which may be based on one or more of the following: position (e.g., bit or column position, Nth token in a data stream, etc.), attribute (where the attribute is associated with one or more values), or a hierarchical/tree structure (consisting of layers of nodes at different levels of detail-such as in nested packet headers or nested document sections). Then, the raw, unprocessed stream of data symbols is parsed, in the context of the organizing pattern, into a stream (or layered structure) of tokens (where each token may have an associated token "type").

Next, extraction criteria are used to extract one or more data items from the token stream or structure, where the extraction criteria are processed according to the organizing pattern to extract one or more tokens (or nodes from a layered structure). For position-based data, the token(s) at the position(s) identified by the extraction criteria are extracted. For attribute/valuebased data, the token(s) and/or node(s) associated with the attribute(s) satisfying the extraction criteria are extracted. For hierarchical/layered data, the token(s) associated with the node(s) matching the extraction criteria are extracted. The extraction criteria may be as simple as an identifier string or may be a query presented to a structured data repository (where the data repository may be organized according to a database schema or data format, such as XML).

The extracted data may be used for further processing by the computing system. For example, the computing system (500) of Figure 5A, while performing one or more embodiments, may perform data comparison. Data comparison may be used to compare two or more data values (e.g., A, B). For example, one or more embodiments may determine whether A > B, A = B, A != B, A < B, etc. The comparison may be performed by submitting A, B, and an opcode specifying an operation related to the comparison into an arithmetic logic unit (ALU) (i.e., circuitry that performs arithmetic and/or bitwise logical operations on the two data values). The ALU outputs the numerical result of the operation and/or one or more status flags related to the numerical result. For example, the status flags may indicate whether the numerical result is a positive number, a negative number, zero, etc. By selecting the proper opcode and then reading the numerical results and/or status flags, the comparison may be executed. For example, in order to determine if A > B, B may be subtracted from A (i.e., A - B), and the status flags may be read to determine if the result is positive (i.e., if A > B, then A - B > 0). In one or more embodiments, B may be considered a threshold, and A is deemed to satisfy the threshold if A = B or if A > B, as determined using the ALU. In one or more embodiments, A and B may be vectors, and comparing A with B requires comparing the first element of vector A with the first element of vector B, the second element of vector A with the second element of vector B, etc. In one or more embodiments, if A and B are strings, the binary values of the strings may be compared.

The computing system (500) in Figure 5A may implement and/or be connected to a data repository. For example, one type of data repository is a database. A database is a collection of information configured for ease of data retrieval, modification, re-organization, and deletion. A Database Management System (DBMS) is a software application that provides an interface for users to define, create, query, update, or administer databases.

The user, or software application, may submit a statement or query into the DBMS. Then the DBMS interprets the statement. The statement may be a select statement to request information, update statement, create statement, delete statement, etc. Moreover, the statement may include parameters that specify data, or data container (database, table, record, column, view, etc.), identifier(s), conditions (comparison operators), functions (e.g., join, full join, count, average, etc.), sort (e.g., ascending, descending), or others. The DBMS may execute the statement. For example, the DBMS may access a memory buffer, a reference or index a file for read, write, deletion, or any combination thereof, for responding to the statement. The DBMS may load the data from persistent or non-persistent storage and perform computations to respond to the query. The DBMS may return the result(s) to the user or software application.

The computing system (500) of Figure 5A may include functionality to present raw and/or processed data, such as results of comparisons and other processing. For example, presenting data may be accomplished through various presenting methods. Specifically, data may be presented through a user interface provided by a computing device. The user interface may include a GUI that displays information on a display device, such as a computer monitor or a touchscreen on a handheld computer device. The GUI may include various GUI widgets that organize what data is shown as well as how data is presented to a user. Furthermore, the GUI may present data directly to the user, e.g., data presented as actual data values through text, or rendered by the computing device into a visual representation of the data, such as through visualizing a data model.

For example, a GUI may first obtain a notification from a software application requesting that a particular data object be presented within the GUI. Next, the GUI may determine a data object type associated with the particular data object, e.g., by obtaining data from a data attribute within the data object that identifies the data object type. Then, the GUI may determine any rules designated for displaying that data object type, e.g., rules specified by a software framework for a data object class or according to any local parameters defined by the GUI for presenting that data object type. Finally, the GUI may obtain data values from the particular data object and render a visual representation of the data values within a display device according to the designated rules for that data object type.

Data may also be presented through various audio methods. In particular, data may be rendered into an audio format and presented as sound through one or more speakers operably connected to a computing device.

Data may also be presented to a user through haptic methods. For example, haptic methods may include vibrations or other physical signals generated by the computing system. For example, data may be presented to a user using a vibration generated by a handheld computer device with a predefined duration and intensity of the vibration to communicate the data.

The above description of functions presents only a few examples of functions performed by the computing system (500) of Figure 5A and the nodes (e.g., node X (522), node Y (524)) and/ or client device (526) in Figure 5B. Other functions may be performed using one or more embodiments of the present techniques.

Therefore, from one perspective, there has been described a method for implementing churn prevention using graphs. The method includes receiving clickstream data, which includes an event, of a user session with an application. The method further includes identifying the event as corresponding to a churn user account and mapping the event to a pair of nodes of a graph. The method further includes updating a churn user count of the pair of nodes in response to identifying the event as corresponding to the churn user account. The method further includes identifying an edge of the graph, corresponding to the pair of nodes. The method further includes updating a value of the edge using an active user count and the churn user count presenting an update responsive to the value.

Further examples are set out in the following numbered clauses:
Clause 1. A method comprising: receiving clickstream data, comprising an event of a plurality of events, of a user session with an application; identifying the event as corresponding to a churn user account; mapping the event to a pair of nodes of a graph; updating a churn user count of the pair of nodes in response to identifying the event as corresponding to the churn user account; identifying an edge, of a plurality of edges of the graph, corresponding to the pair of nodes; updating a value of the edge using an active user count and the churn user count; and presenting an update responsive to the value.
Clause 2. The method of clause 1, further comprising: calculating the value by: dividing the active user count of a destination node, of the pair of nodes, by an active user count of a source node, of the pair of nodes, to generate an active percentage; dividing the churn user count of the destination node, of the pair of nodes, by a churn user count of the source node, of the pair of nodes, to generate a churn percentage; and calculating a difference between the churn percentage and the active percentage to form the value.
Clause 3. The method of clause 1 or 2, further comprising: updating the churn user count by incrementing the churn user count.
Clause 4. The method of clause 1, 2 or 3, further comprising: receiving the event in response to interaction with a user device; identifying a node, of the graph, corresponding to the event; identifying the edge, corresponding to the node; and determining the value, of the edge, satisfies a threshold in response to receiving the event.
Clause 5. The method of any preceding clause , further comprising: presenting the update by transmitting the update to a user device in response to determining the value satisfies a threshold.
Clause 6. The method of any preceding clause, further comprising: presenting the update by transmitting a table comprising the value to a user device.
Clause 7. The method of any preceding clause, further comprising: updating the graph periodically.
Clause 8. The method of any preceding clause, wherein the churn user account has not been accessed for a threshold length of time.
Clause 9. The method of any preceding clause, wherein the edge is an outgoing edge of a source node of the pair of nodes.
Clause 10. The method of any preceding clause, wherein the edge is an incoming edge of a destination node of the pair of nodes.
Clause 11. A system comprising: a graph controller configured to receive clickstream data; a node controller configured to map an event to a pair of nodes; an edge controller configured to update a value of an edge; a modeling application executing on one or more servers and configured for: receiving, by the graph controller, the clickstream data, comprising the event of a plurality of events, of a user session with an application; identifying the event as corresponding to a churn user account; mapping, by the node controller, the event to the pair of nodes of a graph; updating a churn user count of the pair of nodes in response to identifying the event as corresponding to the churn user account; identifying the edge, of a plurality of edges of the graph, corresponding to the pair of nodes; updating, by the edge controller, the value of the edge using an active user count and the churn user count; and presenting an update responsive to the value.
Clause 12. The system of clause 11, wherein the modeling application is further configured for: calculating, by the edge controller, the value by: dividing the active user count of a destination node, of the pair of nodes, by an active user count of a source node, of the pair of nodes, to generate an active percentage; dividing the churn user count of the destination node, of the pair of nodes, by a churn user count of the source node, of the pair of nodes, to generate a churn percentage; and calculating a difference between the churn percentage and the active percentage to form the value.
Clause 13. The system of clause 11 or 12, wherein the modeling application is further configured for: updating the churn user count by incrementing the churn user count.
Clause 14. The system of clause 11, 12 or 13, further comprising: a server application executing on the one or more servers and configured for: receiving the event in response to interaction with a user device; identifying a node, of the graph, corresponding to the event; identifying the edge, corresponding to the node; and determining the value, of the edge, satisfies a threshold in response to receiving the event.
Clause 15. The system of any of clauses 11 to 14, further comprising: a server application executing on the one or more servers and configured for: presenting the update by transmitting the update to a user device in response to determining the value satisfies a threshold.
Clause 16. The system of any of clauses 11 to 15, further comprising: a server application executing on the one or more servers and configured for: presenting the update by transmitting a table comprising the value to a user device.
Clause 17. The system of any of clauses 11 to 16, wherein the modeling application is further configured for: updating the graph periodically.
Clause 18. The system of any of clauses 11 to 17, wherein the churn user account has not been accessed for a threshold length of time.
Clause 19. The system of any of clauses 11 to 18, wherein the edge is an outgoing edge of a source node of the pair of nodes.
Clause 20. A method comprising: receiving an event in response to interaction with a user device; identifying a node, of a graph, corresponding to the event; identifying an edge, corresponding to the node; and determining a value, of the edge, satisfies a threshold in response to receiving the event, wherein the value is calculated using an active user count and a churn user count; and presenting an update responsive to determining the value satisfies the threshold.

While the present techniques have been described with respect to a limited number of embodiments, those skilled in the art, having benefit of this disclosure, will appreciate that other embodiments can be devised which do not depart from the scope disclosed herein. Accordingly, the scope of the invention should be limited only by the attached claims.

## Claims

1. A method comprising:
receiving clickstream data, comprising an event of a plurality of events, of a user session with an application;
identifying the event as corresponding to a churn user account;
mapping the event to a pair of nodes of a graph;
updating a churn user count of the pair of nodes in response to identifying the event as corresponding to the churn user account;
identifying an edge, of a plurality of edges of the graph, corresponding to the pair of nodes;
updating a value of the edge using an active user count and the churn user count; and
presenting an update responsive to the value.

2. The method of claim 1, further comprising:
calculating the value by:
dividing the active user count of a destination node, of the pair of nodes, by an active user count of a source node, of the pair of nodes, to generate an active percentage;
dividing the churn user count of the destination node, of the pair of nodes, by a churn user count of the source node, of the pair of nodes, to generate a churn percentage; and
calculating a difference between the churn percentage and the active percentage to form the value.

3. The method of claim 1 or 2, further comprising:
updating the churn user count by incrementing the churn user count.

4. The method of claim 1, 2 or 3, further comprising:
receiving the event in response to interaction with a user device;
identifying a node, of the graph, corresponding to the event;
identifying the edge, corresponding to the node; and
determining the value, of the edge, satisfies a threshold in response to receiving the event.

5. The method of any preceding claim, further comprising:
presenting the update by transmitting the update to a user device in response to determining the value satisfies a threshold.

6. The method of any preceding claim, further comprising:
presenting the update by transmitting a table comprising the value to a user device.

7. The method of any preceding claim, further comprising:
updating the graph periodically.

8. The method of any preceding claim, wherein the churn user account has not been accessed for a threshold length of time.

9. The method of any preceding claim, wherein the edge is an outgoing edge of a source node of the pair of nodes.

10. The method of any preceding claim, wherein the edge is an incoming edge of a destination node of the pair of nodes.

11. A system comprising:
a graph controller configured to receive clickstream data;
a node controller configured to map an event to a pair of nodes;
an edge controller configured to update a value of an edge;
a modeling application executing on one or more servers and configured for:
receiving, by the graph controller, the clickstream data, comprising the event of a plurality of events, of a user session with an application;
identifying the event as corresponding to a churn user account;
mapping, by the node controller, the event to the pair of nodes of a graph;
updating a churn user count of the pair of nodes in response to identifying the event as corresponding to the churn user account;
identifying the edge, of a plurality of edges of the graph, corresponding to the pair of nodes;
updating, by the edge controller, the value of the edge using an active user count and the churn user count; and
presenting an update responsive to the value.

12. The system of claim 11, further configured to perform the method of any of claims 2 to 10.

13. A method comprising:
receiving an event in response to interaction with a user device;
identifying a node, of a graph, corresponding to the event;
identifying an edge, corresponding to the node; and
determining a value, of the edge, satisfies a threshold in response to receiving the event, wherein the value is calculated using an active user count and a churn user count.
presenting an update responsive to determining the value satisfies the threshold.

14. A computer readable medium comprising instructions that, when executed by one or more processors of a computing system, cause the computing system to carry out the method of any of claims 1-10 or 13.
